# EUROPEAN PATENT APPLICATION

(11) **EP 4 722 132 A1**
(43) Date of publication of application: **08.04.2026**
(21) Application number: 24810225.3
(22) Date of filing: 10.05.2024
(51) Int. Cl.: B65G 1/04, B65G 47/74

(54) **TRANSPORT ROBOT AND WAREHOUSING SYSTEM**

(30) Priority: 25.05.2023 CN 202310603483
(71) Applicant: Beijing Geekplus Technology Co. Ltd, Beijing 100102 (CN)
(72) Inventor: ZHANG, Tingkai, Beijing 100102 (CN); XIAO, Yuhui, Beijing 100102 (CN); XIONG, Yinghui, Beijing 100102 (CN)
(74) Representative: Manna, Sara
(86) International application number: PCT/CN2024/092168
(87) International publication number: WO 2024/239978

(57) **Abstract**

A transport robot and a warehousing system, relating to the technical field of warehouse logistics. The transport robot comprises: a raising/lowering mechanism (200), having a first end portion (200a) and a second end portion (200b) arranged opposite to each other in the height direction, wherein the distance between the first end portion (200a) and the second end portion (200b) is adjustable; a pallet (300), configured to carry an article and provided at the first end portion (200a), wherein the pallet (300) is configured to be driven by the raising/lowering mechanism (200) to selectively move toward or away from the second end portion (200b); and a chassis (100), provided at the second end portion (200b), and configured to support the raising/lowering mechanism (200) and the pallet (300), and drive the raising/lowering mechanism (200) and the pallet (300) to move. The height of the bottom of the raising/lowering mechanism (200) is lower than the height of the top of the chassis (100), and/or the height of the top of the raising/lowering mechanism (200) is higher than the height of the bottom of the pallet (300), so that the overall height of the transport robot when descending to the lowest position is reduced, and the transport robot can stably pass below a lower carrier (400) without interference from the carrier (400), thereby improving the adaptability of the transport robot to carriers (400) of different heights.

## Description

### CROSS-REFERENCE TO RELATED APPLICATION

The present application claims priority to Chinese Patent Application Serial No. 202310603483.3, filed on May 25, 2023, the content of which is incorporated herein by reference in its entirety for all purposes.

### FIELD

The present disclosure relates to the field of warehousing and logistics technologies, and in particular to a transport robot and a warehousing system.

### BACKGROUND

With the rapid development of chassis technology of logistics robots, various transport robots have appeared. The transport robot needs to be docked with a carrier (or other robots, the following description uses the carrier only as an example) to realize transfer of articles (such as a bin) between the transport robot and the carrier. For example, the transport robot drives a pallet to lift and lower through a lifting mechanism, to adjust the pallet to a corresponding height of the carrier, and realize the transfer of the articles between the pallet and the carrier.

### SUMMARY

In an aspect, embodiments of the present disclosure provide a transport robot, including:
a lifting mechanism having a first end portion and a second end portion arranged opposite each other in a height direction, and a distance between the first end portion and the second end portion being variable;
a pallet configured to carry an article and arranged at the first end portion, and configured to be driven by the lifting mechanism to selectively move in a direction toward or away from the second end portion; and
a chassis arranged at the second end portion and configured to support the lifting mechanism and the pallet and drive the lifting mechanism and the pallet to travel,
in which a height of a bottom of the lifting mechanism is lower than a height of a top of the chassis, and/or a height of a top of the lifting mechanism is higher than a height of a bottom of the pallet.

In another aspect, embodiments of the present disclosure further provide a warehousing system including the above-described transport robot and a carrier, in which the carrier has a bearing frame for carrying an article;
and the transport robot realizes transfer of the article between the transport robot and the carrier by performing docking with the bearing frame through the pallet.

### BRIEF DESCRIPTION OF THE DRAWINGS

FIG. 1 is a structural schematic diagram of a transport robot at a second working height provided by some embodiments of the present disclosure.
FIG. 2 is a front view of FIG. 1.
FIG. 3 is a structural schematic diagram of a transport robot at a first working height provided by some embodiments of the present disclosure.
FIG. 4 is a front view of FIG. 3.
FIG. 5 is a schematic diagram of a first state during docking between a transport robot and a carrier provided by some embodiments of the present disclosure.
FIG. 6 is a front view of FIG. 5.
FIG. 7 is a schematic diagram of a second state during docking between a transport robot and a carrier provided by some embodiments of the present disclosure.
FIG. 8 is a front view of FIG. 7.
FIG. 9 is a schematic diagram of a third state during docking between a transport robot and a carrier provided by some embodiments of the present disclosure.
FIG. 10 is a front view of FIG. 9.

### Reference numerals:

100-chassis; 200-lifting mechanism; 300-pallet; 400-carrier; 500-bin;
110-traveling wheel; 120-accommodating cavity; 200a-first end portion; 200b-second end portion; 210-lifting assembly; 220-power assembly; 310-bearing portion; 320-support portion; 330-stopping portion; 340-avoidance portion; 350-cover plate; 410-support frame; 420-bearing frame;
200a1, 200a2-first sub-end portion; 200b1, 200b2-second sub-end portion; 211-connecting rod; 212-connecting member; 221-power portion; 222-transmission portion; 311-avoidance opening; 321-void; 322-notch; 351-transverse portion; 352-vertical portion; 421-insert bar; 421a-insert tooth gap;
3211-first void; 3212-second void.

### DETAILED DESCRIPTION OF THE DISCLOSURE

In order to make those skilled in the art better understand the solution of the present disclosure, technical solutions in embodiments of the present disclosure will be clearly and completely described below with reference to the accompanying drawings in the embodiments of the present disclosure. It is apparent that the described embodiments are only a part of the embodiments of the present disclosure, and not all of them. Based on the embodiments of the present disclosure, all other embodiments obtained by those skilled in the art without paying creative efforts, fall into the protection scope of the present disclosure.

Implementations of the present disclosure will be further described in detail below with reference to the drawings and embodiments. The following embodiments serve to illustrate the present disclosure, but are not intended to limit the scope of the present disclosure.

In the description of embodiments of the present disclosure, it is to be understood that terms such as "central," "longitudinal," "transverse," "upper," "lower," "front," "rear," "left," "right," "vertical," "horizontal," "top," "bottom," "inner," "outer," should be construed to refer to the orientation as then described or as shown in the drawings under discussion. These relative terms are for convenience of description of the embodiments of the present disclosure and do not require that the present disclosure be constructed or operated in a particular orientation. In addition, terms such as "first" "second" and "third" are used herein for purposes of description and are not intended to indicate or imply relative importance or significance.

In the description of embodiments of the present disclosure, it should be noted that unless specified or limited otherwise, the terms "connected," "coupled," and the like are used broadly, and may be, for example, fixed connections, detachable connections, or integral connections; may also be mechanical or electrical connections; may also be direct connections or indirect connections via intervening structures. These having ordinary skills in the art may understand the specific meanings in embodiments of the present disclosure according to specific situations.

In embodiments of the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature. Furthermore, a first feature "on," "above," or "on top of" a second feature may include an embodiment in which the first feature is right or obliquely "on," "above," or "on top of" the second feature, or just means that the first feature is at a height higher than that of the second feature. While a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example are included in at least one embodiment or example of embodiments of the present disclosure. In the present specification, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, without conflicting, various embodiments or examples or features of various embodiments or examples described in the present specification may be combined by those skilled in the art.

In the field of warehousing, logistics, material transporting, and order picking, robots are very good application devices as transporting and picking carriers. The robot loads an article (such as a bin), transports the article to a designated place, and docks with the carrier or other robots (the following description uses the carrier only as an example). That is, the article is transported to a designated position through a chassis of the robot, and the article is lifted or lowered to a height matching with a bearing surface of the carrier by a lifting mechanism of the robot, so that the article on the robot is transferred to the carrier.

Alternatively, the article on the carrier is transferred to the robot by moving the robot to a designated place and docking with the carrier.

It could be understood that the robot may be referred to as a transport robot, a mobile robot, a transport device, a logistics robot, or the like, and the following description uses the transport robot as an example.

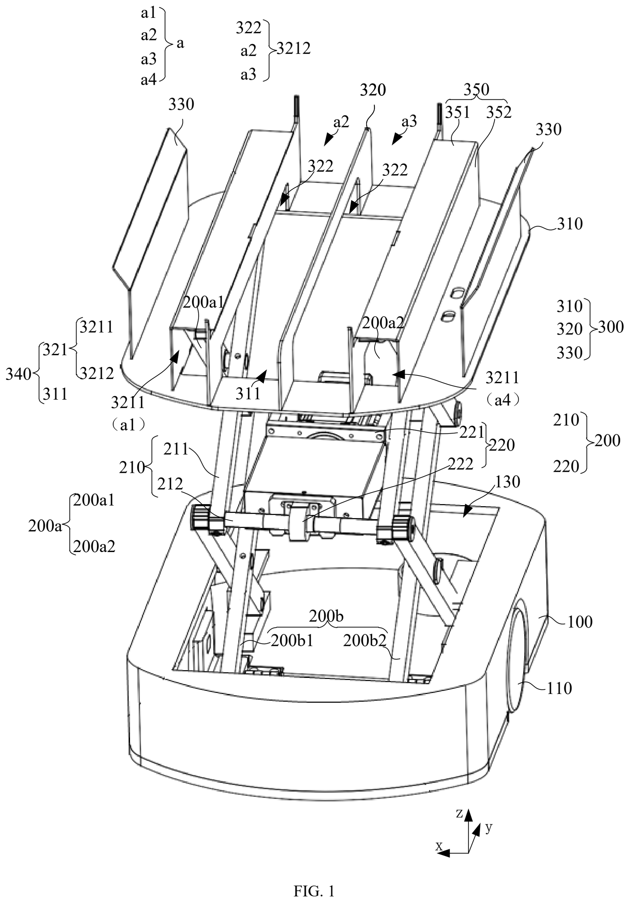

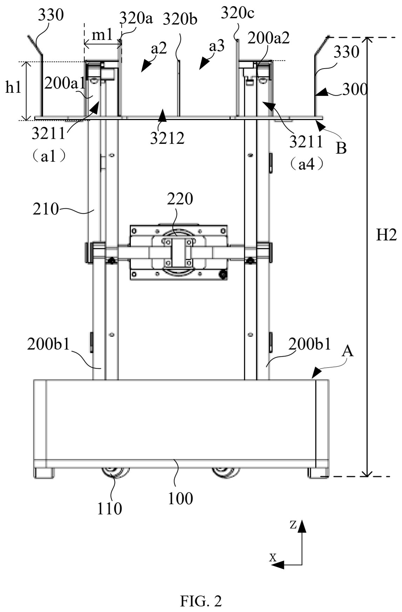

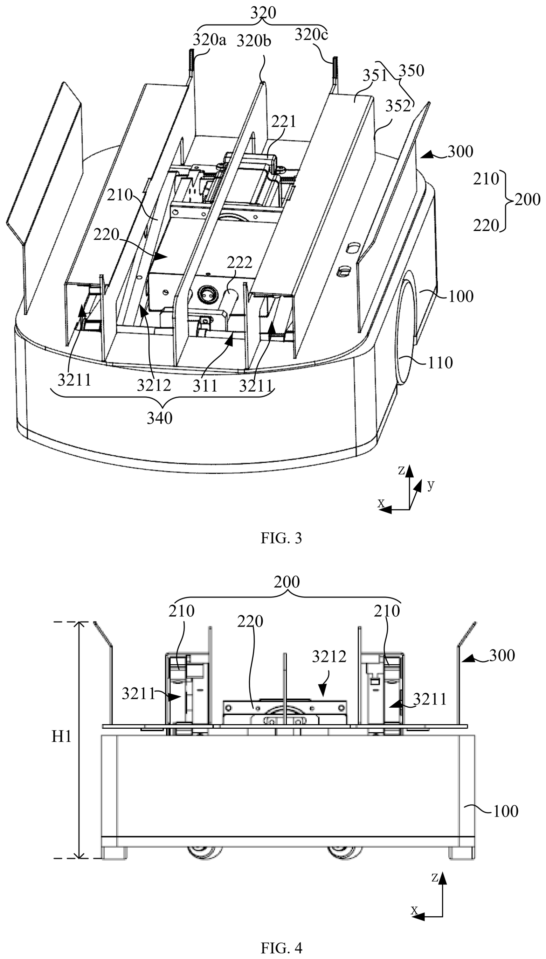

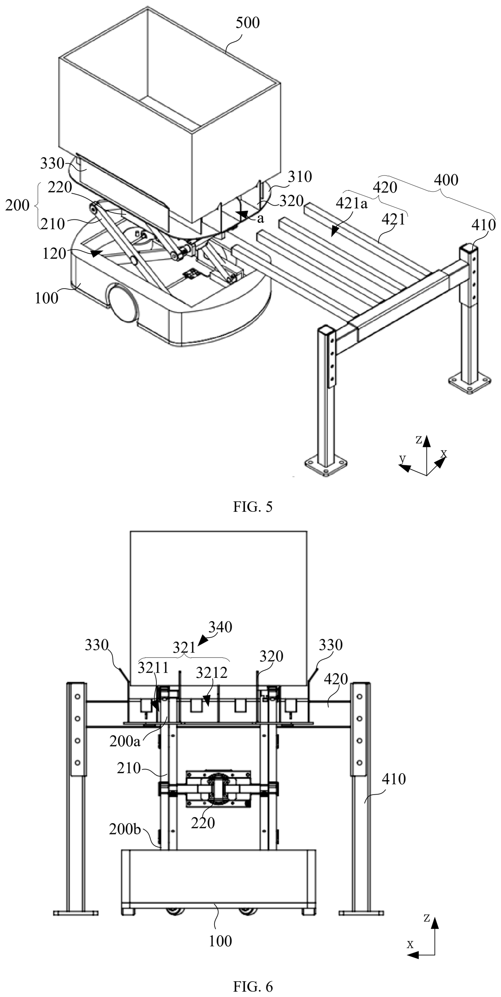

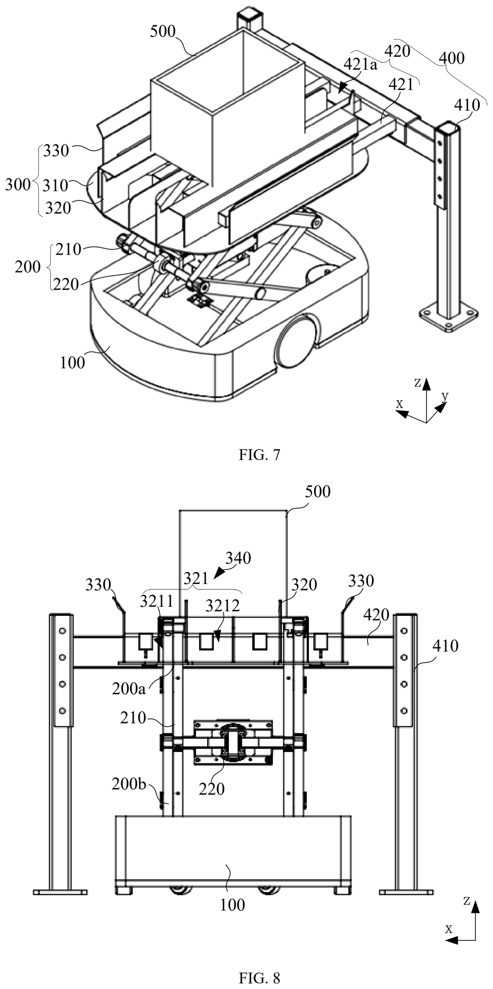

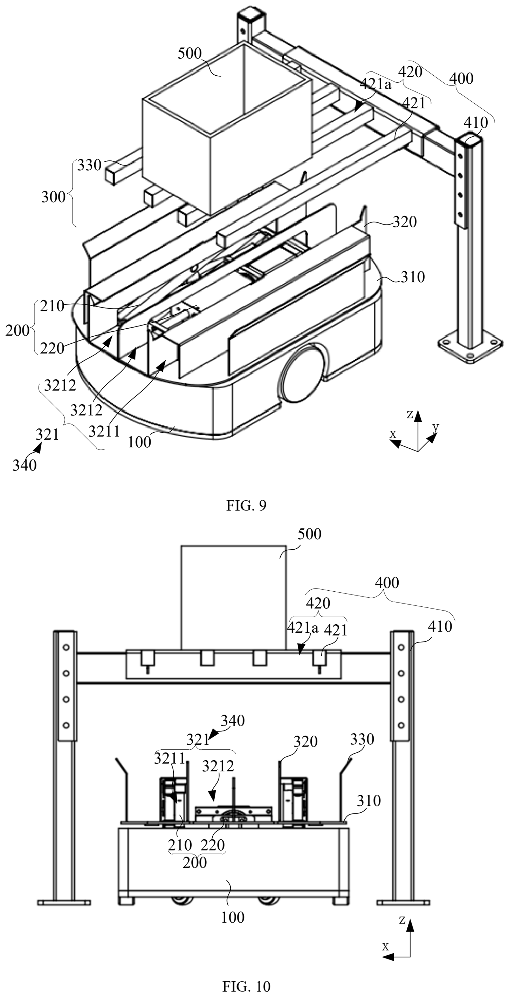

FIG. 1 is a structural schematic diagram of a transport robot at a second working height provided by some embodiments of the present disclosure; FIG. 2 is a front view of FIG. 1; FIG. 3 is a structural schematic diagram of a transport robot at a first working height provided by some embodiments of the present disclosure; FIG. 4 is a front view of FIG. 3; FIG. 5 is a schematic diagram of a first state during docking between a transport robot and a carrier provided by some embodiments of the present disclosure; FIG. 6 is a front view of FIG. 5; FIG. 7 is a schematic diagram of a second state during docking between a transport robot and a carrier provided by some embodiments of the present disclosure; FIG. 8 is a front view of FIG. 7; FIG. 9 is a schematic diagram of a third state during docking between a transport robot and a carrier provided by some embodiments of the present disclosure; and FIG. 10 is a front view of FIG. 9. In some examples, referring to FIGS. 1 to 10, some embodiments of the present disclosure provide a transport robot and a carrier 400.

A transport robot provided by some embodiments of the present disclosure will be described in detail below. Referring to FIGS. 1 to 4, the transport robot includes a lifting mechanism 200 having a first end portion 200a and a second end portion 200b arranged opposite each other in a height direction, and a distance between the first end portion 200a and the second end portion 200b may be variable. The height direction of the lifting mechanism 200 is the lifting and lowering direction of the lifting mechanism 200, i.e., the height direction of the transport robot, and is shown by the z direction in FIG. 1.

Further, for convenience of description, a width direction of the transport robot may be shown by the x-direction, and a length direction may be shown by the y-direction.

It should be noted that the first end portion 200a covers a partial structure of the lifting mechanism 200 extends a preset length from an end face, and the second end portion 200b covers a partial structure of the lifting mechanism 200 extends a preset length from the other end face. The preset length may be less than or equal to 1/3 of a length of the entire lifting mechanism 200, and the preset length is not limited here, and in some examples, the preset length may be adjusted according to a specific structure and a length dimension of the lifting mechanism 200. The length of the lifting mechanism 200 refers to a distance between the first end portion 200a and the second end portion 200b when the lifting mechanism 200 is extended to a maximum length (which may also be referred to as a maximum height).

The structure of the transport robot will be described below by taking the first end portion 200a as a top of the lifting mechanism 200 and the second end portion 200b as a bottom of the lifting mechanism 200 as an example.

Referring to FIG. 1, the transport robot according to some embodiments of the present disclosure may include a pallet 300, and the pallet 300 may be configured to carry an article and is arranged on the first end portion 200a of the lifting mechanism 200, that is, the pallet 300 is arranged on the top of the lifting mechanism 200. The pallet 300 is configured to be driven by the lifting mechanism 200 to selectively move in a direction toward or away from the second end portion 200b.

For example, when the first end portion 200a of the lifting mechanism 200 rises in the height direction away from the second end portion 200b, the distance between the first end portion 200a and the second end portion 200b increases, and the pallet 300 located on the first end portion 200a is lifted accordingly. Conversely, when the first end portion 200a of the lifting mechanism 200 lowers in the height direction toward the second end portion 200b, the distance between the first end portion 200a and the second end portion 200b decreases, and the pallet 300 located on the first end portion 200a is lowered accordingly.

The transport robot may include a chassis 100, and the chassis 100 is arranged at the second end portion 200b of the lifting mechanism 200 to support the lifting mechanism 200 and the pallet 300. The bottom of the chassis 100 is provided with a traveling wheel 110, and the chassis 100 travels on a traveling platform (for example, the ground) driven by the traveling wheel 110, driving the lifting mechanism 200 and the pallet 300 to travel, so that the pallet 300 or the entire transport robot moves to a designated place and docks with the corresponding carrier 400 for article transfer.

In some examples, the carrier 400 includes, but is not limited to, a shelf (as shown in FIGS. 5-10), or a docking device docking with a conveyor line.

It could be understood that the first end portion 200a of the lifting mechanism 200 rises or lowers in a direction away from or toward the second end portion 200b in the height direction, so that the first end portion 200a of the lifting mechanism 200 rises or lowers in a direction away from or toward the chassis 100 in the height direction, and the pallet 300 on the lifting mechanism 200 is lifted and lowered relative to the chassis 100 in an up-down direction, selectively increasing or decreasing the height of the entire transport robot. The height of the transport robot is the distance between the top of the pallet 300 and the bottom of the chassis 100, and is specifically shown by H2 in FIG. 2 and H1 in FIG. 4.

For example, in FIG. 1, the height of the transport robot is the second working height, and in FIG. 4, the height of the transport robot is the first working height.

Referring to FIGS. 5 to 10, the carrier 400 may include a support frame 410 and a bearing frame 420, the support frame 410 is connected to the bearing frame 420 to support the bearing frame 420, and the bearing frame 420 is configured to carry a bin 500 (the bin 500 is taken as an example below).

The transport robot realizes transfer of the article between the transport robot and the carrier 400 by performing docking with the bearing frame 420 through the pallet 300.

In some examples, in a case where an article needs to be transferred from the transport robot onto the carrier 400, the transport robot is configured to perform at least one of: driving the pallet 300 to a position higher than the bearing frame 420; moving the pallet 300 onto the bearing frame 420; and lowering the pallet 300 to a position below the bearing frame 420 such that the article is switched from being supported by the pallet 300 to being supported by the bearing frame 420.

For example, when the bin 500 needs to be transferred from the transport robot to the carrier 400, the bin 500 arranged on the pallet 300 may be lifted to a designated height under the driving of the lifting mechanism 200, then the pallet 300 may be moved to the bearing frame 420 under the driving of the chassis 100 to dock with the bearing frame 420, and then the lifting mechanism 200 drives the pallet 300 to be lowered and passed through the bearing frame 420 until it is lowered to the bottom of the bearing frame 420, so that the bin 500 on the pallet 300 is switched from being supported by the pallet 300 to being supported by the bearing frame 420, and the bin 500 is transferred from the transport robot to the carrier 400.

In some examples, the transport robot may be driven by the chassis 100 to move along the bottom of the bearing frame 420 to other positions, such as to move out of the carrier 400.

In some examples, in a case where an article needs to be transferred from the carrier 400 onto the transport robot, the transport robot is configured to perform at least one of: driving the pallet 300 to a position below the bearing frame 420; moving the pallet 300 to a bottom of the bearing frame 420; and lifting the pallet 300 to a position above the bearing frame 420 such that the article is switched from being supported by the bearing frame 420 to being supported by the pallet 300.

For example, in a case where the bin 500 on the carrier 400 needs to be transferred to the transport robot, the transport robot lowers the pallet 300 to a height position lower than the bearing frame 420 by the lifting mechanism 200, the transport robot moves at the bottom of the carrier 400 under the driving of the chassis 100 until it moves to a designated position for docking with the bin 500, and then the pallet 300 is driven by the lifting mechanism 200 to be lifted to a position higher than the bearing frame 420, so that the bin 500 is switched from being supported by the bearing frame 420 to being supported by the pallet 300, the bin 500 is transferred from the carrier 400 to the transport robot, and finally the transport robot carries the bin 500 and moves out of the carrier 400.

Referring to FIG. 1, in some examples, the pallet 300 may include a bearing portion 310 and a plurality of support portions 320. The plurality of support portions 320 are arranged at intervals on a side of the bearing portion 310 facing away from the second end portion 200b, and each support portion 320 extends upward in a direction away from the bearing portion 310. The plurality of support portions 320 arranged at intervals are formed into a comb tooth structure, and an end of the comb tooth structure facing away from the bearing portion 310 is configured to carry the bin 500.

Referring to FIGS. 5 to 10, the bearing frame 420 includes a plurality of insert bars 421 arranged at intervals, the plurality of insert bars 421 form an insert tooth structure, and the insert tooth gaps 421a formed by the plurality of insert bars 421 (i.e., the insert tooth structure) are arranged in correspondence with the plurality of support portions 320. For example, the plurality of insert tooth gaps 421a are arranged in one-to-one correspondence with the plurality of support portions 320, and a width of each insert tooth gap 421a matches a width of the corresponding support portion 320. In other words, the gaps a of the comb tooth structure formed by the plurality of support portions 320 are arranged in correspondence with the plurality of insert bars 421. For example, the plurality of gaps a of the comb tooth structure are arranged in one-to-one correspondence with the plurality of insert bars 421, and a width of each gap a matches a width of the corresponding insert bar 421.

It should be noted that the width of the insert bar 421 and the width of the insert tooth gap 421a are widths of the corresponding structures along a direction perpendicular to an extending direction of the insert bar 421 (for example, a width along the x-direction in FIG. 5). The width of the support portion 320 and the width of the gap a of the comb tooth structure are widths of the corresponding members in an arrangement direction of the plurality of support portions 420 (for example, the width along the x-direction in FIG. 5).

The docking between the pallet 300 and the bearing frame 420 includes each support portion 320 extending into a corresponding insert tooth gap 421a, that is, the insert bar 421 is inserted into the gap a of the comb tooth structure (refer to a1, a2, a3 and a4 in FIG. 2) when the pallet 300 docks with the bearing frame 420 of the carrier 400, to transfer the bin 500 between the comb tooth structure and the insert tooth structure. In other words, when the pallet 300 docks with the carrier 400, the support portion 320 of the comb tooth structure extends into the insert tooth gap 421a of the insert tooth structure.

The gap a of the comb tooth structure is a gap of the support portions 320 on a side in the arrangement direction, and for example, the gaps a of the comb tooth structure include a gap between two adjacent support portions 320, and also includes gaps located at an outer side of the two outermost support portions 320. For example, there may be three support portions 320, and the comb tooth structure formed by the three support portions 320 could be understood as having four gaps a, and as shown in FIG. 3, the gap a1, the gap a2, the gap a3, and the gap a4 are arranged sequentially in the x-direction. The gap a1 and the gap a4 are gaps located at an outer side of the two outermost support portions 320, and the gap a2 and the gap a3 are gaps between two pairs of adjacent support portions 320, respectively.

In some examples, the insert tooth structure may include four insert bars 421 arranged at intervals, and the insert tooth gap 421a is a gap formed between two adjacent insert bars 421.

Referring to FIGS. 5 to 10, in a case where the bin 500 needs to be transferred from the transport robot to the carrier 400, the transport robot drives the bin 500 to move to a designated place, adjusts the bin 500 on the pallet 300 to the second working height by the lifting mechanism 200, and aligns each gap a of the comb tooth structure with each insert bar 421 of the insert tooth structure on the carrier 400 (as illustrated in FIGS. 5 and 6). The transport robot subsequently moves along the extension direction of the insert bars 421 (e.g., the y-direction), to insert each insert bar into the respective gap a of the comb tooth structure. That is, each insert bar 421 is inserted into a space formed between the comb tooth structure and the bottom of the bin 500, completing the docking between the comb tooth structure and the insert tooth structure. In this case, the insert bars 421 are located below the bin 500.

Then, the transport robot drives the pallet 300 to start lowering by the lifting mechanism 200 until the bin 500 is lowered to come into contact with the insert tooth structure, and the bin 500 is changed from being lifted by the comb tooth structure to being lifted by the insert tooth structure. The transport robot continues to drive the pallet 300 to be lowered by the lifting mechanism 200 until the pallet 300 is lowered to the first working height, the comb tooth structure is disengaged from the insert tooth structure, and the entire process of transferring the bin 500 from the transport robot to the carrier 400 is completed (as illustrated in FIGS. 9 and 10). Finally, the transport robot moves along the horizontal direction (e.g., shown by the y-direction) at the bottom of the insert tooth structure to disengage the entire carrier 400.

Referring to FIGS. 5 to 10, in a case where the bin 500 on the carrier 400 needs to be transferred to the transport robot, the transport robot lowers the pallet 300 to the first working height by the lifting mechanism 200 so that the entire transport robot is lower than the insert tooth structure of the carrier 400 (as illustrated in FIGS. 9 and 10), and then the transport robot moves to the bottom of the insert tooth structure, and adjusts each gap of the comb tooth structure to face each insert bar 421 supporting the bin 500 in the height direction.

Then, the pallet 300 is driven to be lifted by the lifting mechanism 200, so that each insert bar 421 enters the corresponding gap of the comb tooth structure until the comb tooth structure comes into contact with the bottom of the bin 500, and the bin 500 is changed from being lifted by the insert tooth structure to being lifted by the comb tooth structure. Then, the lifting mechanism 200 of the transport robot continues to drive the comb tooth structure to be lifted to the second working height, and the bin 500 is disengaged from the insert tooth structure (as illustrated in FIGS. 7 and 8). Finally, the transport robot carries the bin 500 and moves along the insert bar 421 (see the y-direction) to disengage the carrier 400 (as illustrated in FIGS. 5 and 6), and moves to a designated place to perform subsequent work.

Referring to FIG. 1, in some examples, the pallet 300 may further include baffles 330 (a left side plate and a right side plate) arranged on both sides of the comb tooth structure along the arrangement direction of the support portion 320, and an end of each baffle 330 away from the bearing portion 310 is inclined in a direction away from an interior of the comb tooth structure, so that when receiving the bin 500 on the carrier 400, it is not necessary to align the left and right side edges of the comb tooth structure with the edge of the bin 500, and the bin 500 could be collected on the comb tooth structure between the left and right side plates, reducing the docking difficulty between the pallet 300 and the bin 500 on the carrier 400, and improving the docking efficiency.

From the above, it could be seen that the transport robot includes at least three working heights in the working process. The height at which the transport robot travels through the bottom of the carrier 400 is the first working height. The height at which the transport robot starts docking with the bin 500 on the carrier 400 and starts moving after the docking is completed is the second working height, for example, the height of the transport robot when the comb tooth structure of the transport robot is docked into the insert tooth structure of the carrier 400, and the bin 500 is disengaged from the insert tooth structure and carried on the comb tooth structure. The height at the time of the "bin 500 to the person" stage, for example, the picking stage, is the third working height. In some scenarios, the first working height < the second working height < the third working height.

It could be understood that in the process of transferring and docking the bin 500, the transport robot needs to travel through the bottom of the carrier 400 at some working stages, and when the carrier 400 is low, the transport robot needs to be retracted to a lower height, that is, the lifting mechanism 200 needs to drive the pallet 300 to be lowered to a lower height, so that the entire transport robot could freely move at the bottom of the carrier 400 without colliding with the carrier 400.

In practice, the distance between the first end portion 200a and the second end portion 200b of the lifting mechanism 200 cannot be reduced to a lower level due to structural limitations and the like of the lifting mechanism 200. For example, when the distance between the first end portion 200a and the second end portion 200b of the lifting mechanism 200 is reduced to a certain range, the structural strength of the lifting mechanism 200 is rapidly weakened, affecting the structural stability of the lifting mechanism 200, making it impossible to realize stable lifting and lowering of the pallet 300 and thus effectively transferring the bin 500.

In order to reduce the height of the transport robot at the lowest position, in some examples of embodiments of the present disclosure, the height of the second end portion 200b may be lower than the height of the top of the chassis 100 (e.g., the position shown by A in FIG. 2). In other words, in some examples, a projection of the chassis 100 overlaps a projection of at least a portion of the lifting mechanism 200 in a direction perpendicular to the height direction (e.g., the x-direction and the y-direction). For example, the projection of the chassis 100 overlaps the projection of the second end portion 200b of the lifting mechanism 200 in the direction perpendicular to the height direction (e.g., the x-direction and the y-direction).

In some examples, the height of the first end portion 200a may be higher than the height of the bottom of the pallet 300 (e.g., the position shown by B in FIG. 2). In other words, in some examples, the projection of the pallet 300 overlaps the projection of at least a portion of the lifting mechanism 200 in the direction perpendicular to the height direction (e.g., the x-direction and the y-direction). For example, the projection of the pallet 300 overlaps a projection of the first end portion 200a of the lifting mechanism 200 in the direction perpendicular to the height direction (e.g., the x-direction and the y-direction).

In some examples, the height of the second end portion 200b may be lower than the height of the top of the chassis 100, and the height of the first end portion 200a may be higher than the height of the bottom of the pallet 300. In other words, in some examples, the projection of the pallet 300 overlaps the projection of at least a portion of the lifting mechanism 200 in the direction perpendicular to the height direction (e.g., the x-direction and the y-direction), while the projection of the chassis 100 overlaps the projection of at least a portion of the lifting mechanism 200 in the direction perpendicular to the height direction (e.g., the x-direction and the y-direction). For example, the projection of the pallet 300 overlaps the projection of the first end portion 200a of the lifting mechanism 200 in the direction perpendicular to the height direction (e.g., the x-direction and the y-direction), and the projection of the chassis 100 overlaps the projection of the second end portion 200b of the lifting mechanism 200 in the direction perpendicular to the height direction (e.g., the x-direction and the y-direction).

That is, in some examples of embodiments of the present disclosure, the projection of at least one of the pallet 300 and the chassis 100 overlaps the projection of at least a portion of the lifting mechanism 200 in the direction perpendicular to the height direction (e.g., the x-direction and the y-direction), for example, at least a portion of the lifting mechanism 200 overlaps the vertical height of the pallet 300 or the chassis 100.

In embodiments of the present disclosure, by having the at least a portion of the lifting mechanism 200 share a segment of height space with the pallet 300 or the chassis 100, that is, by adopting a simple spatial offset, the overall height of the transport robot when it is lowered to the lowest position is reduced, so that the transport robot could stably travel freely at the bottom of the lower carrier 400 without being interfered by the carrier 400, and the adaptability of the transport robot to the carrier 400 of different heights is improved.

In addition, embodiments of the present disclosure could reduce the height of the transport robot at the lowest position without adjusting the retraction amplitude of the lifting mechanism 200, avoiding affecting the structural strength when the lifting mechanism 200 is retracted to the lowest position, ensuring the structural stability of the lifting mechanism 200, and ensuring that the lifting mechanism 200 drives the pallet 300 to lift and lower stably.

The structure of the transport robot will be described by taking the height of the top of the lifting mechanism 200 being lower than the height of the bottom of the pallet 300 as an example.

Referring to FIG. 1, in some examples, the lifting mechanism 200 may include a lifting assembly 210 and a power assembly 220, and two end portions of the lifting assembly 210 opposite each other in the height direction are the first end portion 200a and the second end portion 200b, respectively. For example, a top (e.g., the first end portion 200a) of the lifting assembly 210 is connected to the pallet 300, and a bottom (e.g., the second end portion 200b) of the lifting assembly 210 is connected to the chassis 100. The lifting assembly 210 may include, but is not limited to, a lifting structure such as a telescopic rod, a scissor lift structure, and embodiments of the present disclosure do not limit the structure of the lifting assembly 210, as long as it is ensured that the top of the lifting assembly 210 could drive the pallet 300 to selectively move toward or away from the bottom of the lifting mechanism 200 or the chassis 100.

The power assembly 220 is connected to the lifting assembly 210 to drive the first end portion 200a of the lifting assembly 210 to move in a direction toward or away from the second end portion 200b. The power assembly 220 may include, but is not limited to, a drive structure such as a cylinder and a motor.

For example, the lifting assembly 210 is a scissor lift structure. For example, the lifting assembly 210 includes two groups of connecting rods 211 arranged oppositely in the direction perpendicular to the height direction. For example, the two groups of connecting rods 211 are arranged at intervals in the x-direction, at least two connecting rods 211 of each group of connecting rods 211 are arranged in a crossed configuration, and the two connecting rods 211 arranged in a crossed configuration are hinged at an intersection point. The top of each group of connecting rods 211 (i.e., the first end portion 200a) is connected with the pallet 300, the bottom of each group of connecting rods 211 is connected with the chassis 100, and in each group of the connecting rods 211, at least one connecting rod 211 of the two connecting rods arranged in a crossed configuration is connected with the power assembly 220. The same side ends of the two connecting rods 211 arranged in the crossed configuration are driven to move toward or away from each other, to change an angle between the two connecting rods 211 arranged in the crossed configuration, so that a distance between the two ends of each group of connecting rods 211 in the height direction is changed, and the pallet 300 on the top of each group of connecting rods 211 may be selectively lifted or lowered away from or toward the bottom of each group of connecting rods 211 (or the chassis 100).

In some examples, each group of connecting rods 211 of the lifting assembly 210 may include a pair of connecting rods 211 arranged in a crossed configuration, or may include a plurality of pairs of connecting rods 211 arranged in a crossed configuration, the plurality of pairs of connecting rods 211 are sequentially arranged in the height direction, and adjacent ends of two adjacent pairs of connecting rods 211 are rotatably connected. For example, each group of connecting rods 211 of the lifting assembly 210 includes two pairs of connecting rods 211 arranged in a crossed configuration, that is, the lifting assembly 210 has a double scissor lift structure, and adjacent ends of the two pairs of connecting rods 211 are rotatably connected.

In some examples, an end of the power assembly 220 may drive the same side connecting ends of two pairs of connecting rods 211 in each group of connecting rods 211 to move toward each other so that the distance between the top and bottom of each group of connecting rods 211 increases accordingly.

In some examples, an end of the power assembly 220 may drive the same side connecting ends of two pairs of connecting rods 211 in each group of connecting rods 211 to move away from each other so that the distance between the top and bottom of each group of connecting rods 211 decreases accordingly.

In some examples, the two groups of connecting rods 211 may share one power assembly 220. For example, the power assembly 220 may be arranged between the two groups of connecting rods 211, and two connecting members 212 arranged in parallel are connected between the two groups of connecting rods 211. For example, the two connecting members 212 are arranged at intervals in the y-direction, and each connecting member 212 extends in the x-direction, that is, are arranged at intervals in the arrangement direction of the two groups of connecting rods 211.

It could be understood that since each pair of connecting rods 211 has two connecting rods 211, two pairs of connecting rods 211 in each group of connecting rods 211 have two adjacent ends arranged at intervals in the y-direction, one connecting member 212 is arranged between the one pair of adjacent ends of the two pairs of connecting rods 211 in the two groups of connecting rods 211, and the two connecting rods 211 corresponding to the pair of adjacent ends are rotatably connected to ends of the corresponding connecting member 212. The other connecting member 212 is arranged between the other pair of adjacent ends of the two pairs of connecting rods 211 in the two groups of connecting rods 211, and the two connecting rods corresponding to the other pair of adjacent ends are rotatably connected to ends of the connecting member 212.

In some examples, the power assembly 220 has a first end connected to one of the connecting members 212 and a second end connected to the other of the connecting members 212.

In some examples, the power assembly 220 drives the two connecting members 212 to move toward each other, to reduce the angle of each pair of connecting rod 211 in each group of connecting rod 211, so that the tops of the two groups of connecting rods 211 move in the direction away from the bottom.

In some examples, the power assembly 220 drives the two connecting members 212 to move away from each other, to increase the angle of each pair of connecting rod 211 in each group of connecting rod 211, so that the tops of the two groups of connecting rods 211 move in the direction toward the bottom.

By way of example, the power assembly 220 may include a power portion 221 and a transmission portion 222. A first end of the transmission portion 222 is connected to the power portion 221, and a second end of the transmission portion 222 is connected to at least one connecting member 212, so that the power portion 221 drives the transmission portion 222 to move to drive the connecting member 212 to move. For example, the power portion 221 may be a motor, the transmission portion 222 may include a screw rod and a nut, the screw rod is connected to an output shaft of the motor, the nut is threaded on the screw rod, one of the connecting members 212 is connected to the nut, and the other connecting member 212 is connected to a fixed end of the motor facing away from the output shaft, such as a motor housing.

When working, the output shaft of the motor drives the screw rod to rotate, so that the nut on the screw rod moves along the screw rod, driving one of the connecting members 212 connected on the nut to move in the direction toward or away from the other of the connecting members 212, and realizing the adjustment of the distance between the top and bottom of the two groups of connecting rods 211.

Of course, in other examples, the power assembly 220 may also be a motor and a revolute pair arranged at the chassis 100, a first end of the revolute pair is connected to the output shaft of the motor, a second end of the revolute pair is connected to at least one connecting member 212, and the revolute pair is driven to rotate by the motor, so that the revolute pair drives the connecting member 212 to move in the height direction and the horizontal direction (such as the y-direction), realizing the adjustment of the distance between the top and bottom of the two groups of connecting rods 211. Embodiments of the present disclosure do not limit the structure of the power assembly 220 as long as it could be ensured that the power assembly 220 could drive the at least one connecting member 212 to move in the height direction and the horizontal direction.

As an implementation, the height of the first end portion 200a of the lifting assembly 210 may be higher than the height of the bottom of the pallet 300, i.e. the first end portion 200a and the pallet 300 at least partially overlap in a direction perpendicular to the height direction (e.g., the x-direction). For example, the first end portion 200a of the lifting assembly 210 may overlap the vertical height of the pallet 300. Referring to FIG. 2, an overlapping height of the first end portion 200a of the lifting assembly 210 and the pallet 300 in the horizontal direction may be denoted by h1 in FIG. 2.

For example, when the lifting assembly 210 has a scissor lift structure, the tops of the two groups of connecting rods 211 of the lifting assembly 210 overlap the vertical height of the pallet 300, so that the first end portion 200a of the lifting assembly 210 and the pallet 300 share a same height space, and thus the overall height of the transport robot is reduced, and the height of the transport robot when it is lowered to the lowest position is also reduced.

It should be noted that by overlapping the first end portion 200a of the lifting assembly 210 on the vertical height of the pallet 300, the height of the entire transport robot is reduced, and the lowest position height of the transport robot (a height at the lowering limit position) is less than or equal to the first working height, so that the transport robot could be retracted to the first working height and freely travel through the bottom of the carrier 400. In addition, the highest position height of the transport robot (a height at the lifting limit position) is greater than or equal to the third working height, to ensure that the transport robot could extend to the third working height and realize the working stage of "bins 500 to people".

It could be understood that a portion of the lifting assembly 210 overlapping the vertical height of the pallet 300 may have a suitable length such as 1/3, 1/4, or 1/5 of the entire length of the lifting assembly 210, and there is no limitation here, as long as the height when the transfer robot is retracted to the lowest position is less than or equal to the first working height, and the height when the transfer robot is extended to the highest position is greater than or equal to the third working height.

Referring to FIGS. 3 and 4, as another implementation, when the distance between the first end portion 200a and the second end portion 200b of the lifting assembly 210 in the height direction (referred to as a vertical distance below) is less than or equal to the first preset distance, the height of the top of the power assembly 220 is higher than the height of the bottom of the pallet 300. For example, the power assembly 220 at least partially overlaps the vertical height of the pallet 300.

For example, as the first end portion 200a of the lifting assembly 210 gradually lowers, the vertical distance between the first end portion 200a and the second end portion 200b of the lifting assembly 210 gradually decreases, and when the vertical distance between the first end portion 200a of the lifting assembly 210 and the second end portion 200b is a first preset distance, the projection of the power assembly 220 in the direction perpendicular to the height direction starts to overlap the pallet 300, and as the first end portion 200a of the lifting assembly 210 continues to lowers, the overlapping area gradually increases. That is, after the lifting assembly 210 retracts a certain distance, a portion of the power assembly 220 utilizes the height space of the pallet 300 without occupying additional height space, so that the height of the transport robot when it is lowered to the lowest position is reduced.

In some examples, as the first end portion 200a of the lifting assembly 210 gradually rises from the lowest position, the overlapping area between the power assembly 220 and the pallet 300 gradually decreases, and when the distance between the first end portion 200a and the second end portion 200b of the lifting assembly 210 is greater than the first preset distance, the power assembly 220 and the pallet 300 do not overlap. That is, the power assembly 220 is disengaged from the pallet 300, and the vertical distance between the pallet 300 and the power assembly 220 gradually increases as the first end portion 200a of the lifting assembly 210 continues to rise.

For convenience of description, when the vertical distance between the first end portion 200a and the second end portion 200b of the lifting assembly 210 is the first preset distance, the height of the transport robot is referred to as a critical height.

In some examples, the critical height is greater than or equal to the first working height and less than the second working height. That is, when the height of the transport robot is greater than the first working height and less than the second working height, the power assembly 220 may overlap the vertical height of the pallet 300, that is, at least a portion of the power assembly 220 extends into the avoidance portion 340 of the pallet 300, and the height of the power assembly 220 extends into the avoidance portion 340 of the pallet 300 gradually increases as the height of the transport robot continuously decreases. When the transport robot retracts to the lowest position, the overlapping area between the power assembly 220 and the pallet 300 is the largest, so that the lowest position height of the transport robot is guaranteed to be equal to or smaller than the first working height.

In addition, during the extending of the lifting mechanism 200, the overlapping height of the power assembly 220 with the pallet 300 gradually decreases as the lifting assembly 210 extends until the power assembly 220 and the pallet 300 do not overlap at all. When the pallet 300 is docked with the carrier 400 at the second working height, the pallet 300 needs to extend into the insert tooth structure of the bearing frame 420, for example, the comb tooth structure of the pallet 300 needs to extend into the insert tooth gap 421a of the insert tooth structure, so when the height of the transport robot is at the second working height, the overlapping area between the power assembly 220 and the pallet 300 is zero, that is, there is no overlap.

It could be understood that the transport robot is at the second working height at least when:
the plurality of support portions 320 carrying the article are horizontally (as illustrated by the y-direction in FIGS. 5 to 10) inserted into the insert tooth gap 421a formed between the plurality of insert bars 421; or
the plurality of support portions 320 are inserted into the insert tooth gap 421a formed between the plurality of insert bars 421 in a height direction (as illustrated by the z-direction in FIGS. 5 to 10) of the transport robot, and support an article on the insert bars 421 until the article is detached from the insert bars 421.

Referring to FIGS. 5 to 10, in some examples, when the bin 500 on the transport robot needs to be transferred to the bearing frame 420 of the carrier 400, the pallet 300 needs to be lifted to the second working height position by the lifting mechanism 200 (as illustrated in FIGS. 5 and 6), and then the pallet 300, such as the comb tooth structure, is moved into the insert tooth structure of the bearing frame 420 along the extending direction of the insert bar 421, so that the insert bar 421 extends into each gap of the comb tooth structure (as illustrated in FIGS. 7 and 8).

In some examples, when the bin 500 on the carrier 400 needs to be transferred to the transport robot, the pallet 300 at the first working height position (as illustrated in FIGS. 9 and 10) needs to be lifted in the direction of the insert tooth structure by the lifting mechanism 200 until the transport robot reaches the second working height, that is, the pallet 300 is at the second working height position (as illustrated in FIGS. 7 to 8), and the support portion 320 of the pallet 300 needs to extend into the insert tooth gap 421a corresponding to the insert tooth structure during the lifting process of the pallet 300.

In some examples, the critical height may be less than the second working height, that is, when the transport robot reaches the second working height, the power assembly 220 does not partially overlap the pallet 300 on the vertical height, that is, the power assembly 220 does not overlap the pallet 300 at all, avoiding interference with the carrier 400 when the pallet 300 is docked with the carrier 400.

In some examples, the critical height may be equal to a second working height, that is, when the transport robot extends to the second working height, the power assembly 220 and the pallet 300 just do not overlap on the vertical height (e.g., the top of the power assembly 220 is in contact with the bottom of the pallet 300), that is, the top of the power assembly 220 gradually moves away from the bottom of the pallet 300 as the transport robot continues to extends from the second working height.

It could be understood that when the bin 500 on the carrier 400 needs to be transferred to the transport robot, the comb tooth structure of the pallet 300 has extended into the insert tooth structure before the transport robot extends to the second working height. In embodiments of the present disclosure, the overlapping height of the power assembly 220 and the pallet 300 on the vertical height will gradually decrease with the extending of the lifting assembly 210 until there is no overlap at all. For example, when the height of the transport robot reaches the second working height with the extending of the lifting assembly 210, the power assembly 220 and the pallet 300 do not overlap on the vertical height. Thus, when the pallet 300 is lifted to a position overlapping the bearing frame 420, a portion of the power assembly 220 overlaps the pallet 300 on the vertical height. As the pallet 300 continues to be lifted, the power assembly 220 continuously moves in the direction away from the pallet 300, i.e., gradually disengaging from the pallet 300. Consequently, the pallet 300 does not interfere with the power assembly 220 before reaching the second working height position and during the contact process with the insert tooth structure.

It could be understood that the arrangement manner in which at least a portion of the lifting mechanism 200 overlaps the pallet 300 in the horizontal direction may include the following two examples.

As an arrangement manner, at least a portion of the lifting mechanism 200 may be located on a side of the pallet 300 in the horizontal direction. In other words, at least a portion of the lifting mechanism 200 and the pallet 300 are arranged sequentially in the horizontal direction, such as the width direction (x-direction), and the first end portion 200a of the lifting mechanism 200 may be connected to a side wall of the pallet 300 to realize the driving of the pallet 300. For example, the first end portion 200a of the lifting assembly 210 extends to a side of the pallet 300 in the horizontal direction, and is connected to the side wall of the pallet 300.

As another arrangement, as described above, at least a portion of the lifting mechanism 200 may overlap the vertical height of the pallet 300, that is, at least a portion of the lifting mechanism 200 extends into the pallet 300 to occupy a portion of the space of the pallet 300. For example, the pallet 300 has an avoidance portion 340 opening toward the second end portion 200b, and the avoidance portion 340 extends in the height direction. At least a portion of the lifting mechanism 200 extends into the avoidance portion 340. The first end portion 200 a of the lifting mechanism 200 is connected to an internal structure of the pallet 300 to realize the driving of the pallet 300.

For example, the pallet 300 has a certain thickness, and a side of the pallet 300 facing the second end portion 200b is recessed inwardly in the height direction to form an avoidance groove (or avoidance hole) for extension of the lifting mechanism 200.

Taking the pallet 300 including the bearing portion 310 and a comb tooth structure arranged on a side of the bearing portion 310 as an example, the bearing portion 310 may be provided with an avoidance opening 311, the avoidance opening 311 has a first end facing the second end portion 200b and a second end in communication with the void 321 formed in the plurality of support portions 320, and the avoidance opening 311 and the void 321 together form the avoidance portion 340.

For example, a projected area of the lifting mechanism 200 on the bearing portion 310 in the height direction may be hollowed out, and the hollowed out area is the avoidance opening 311. Of course, in other examples, a partial area of the bearing portion 310 into which the lifting mechanism 200 extends may be hollowed out, and the hollowed out area may be formed as the avoidance opening 311, but embodiments of the present disclosure do not limit the structure and size of the avoidance opening 311 as long as the lifting mechanism 200 could be ensured to extend into the pallet 300. For example, the outer contour shape of the avoidance opening 311 may be a regular shape such as a circle, a rectangle, a square, or a pentagon, or an irregular shape.

By way of example, the following description is based on a configuration that a projection area of the lifting mechanism 200 on the bearing portion 310 is hollowed out to form the avoidance opening 311.

In some examples, the void 321 may include a first void 3211 formed in the plurality of support portions 320, and the first void 3211 is in communication with the avoidance opening 311. By way of example, in the lifting mechanism 200, the second end portion 200b of the lifting assembly 210 extends into the first void 3211 through the avoidance opening 311.

The first void 3211 may be a gap on a side of the at least one support portion 320 in the arrangement direction of the plurality of support portions 320, and may be, for example, at least one of the gap a1, the gap a2, the gap a3, and the gap a4. Thus, the second end portion 200b of the lifting assembly 210 extends into a gap on the side of the support portion 320 through the avoidance opening 311.

The pallet 300 further includes a cover plate 350 arranged on the bearing portion 310 facing away from the second end portion 200b, the cover plate 350 covers the first void 3211, and cooperates with the support portion 320 corresponding to the first void 3211 to define a space for accommodating the second end portion 200b. The first end portion 200a of the lifting assembly 210 may be connected to the cover plate 350.

Referring to FIG. 2, for convenience of description, the support portions 320 arranged sequentially from left to right are referred to as a first support portion 320a, a second support portion 320b, and a third support portion 320c, respectively.

It should be understood that when the first void 3211 is the gap a1, the support portion 320 corresponding to the first gap 3211 is the first support portion 320a, and when the first void 3211 is the gap a2, the support portion 320 may be at least one of the first support portion 320a and the second support portion 320b.

In a possible implementation, the cover plate 350 includes a transverse portion 351 and a vertical portion 352; the transverse portion 351 is arranged opposite the bearing portion 350, and has a first end connected to the support portion 320 corresponding to the first void 3211 and a second end connected to the vertical portion 352; the vertical portion 352 is arranged opposite the support portion 320, and the transverse portion 351, the vertical portion 352, and the support portion 320 connected to the transverse portion 351 collectively form a space for accommodating the second end portion 200b. The first end portion 200a is connected to the transverse portion 351.

For example, when the first void 3211 is the gap a1 and the support portion 320 corresponding to the first void 3211 is the first support portion 320a, the transverse portion 351 of the cover plate 350 has a first end connected to the first support portion 320a and a second end connected to the vertical portion 352, the second end of the vertical portion 352 is connected to the bearing portion 310, and the transverse portion 351, the vertical portion 352, and the first support portion 320a collectively define a space for accommodating the first end portion 200a of the lifting assembly 210.

The surface of the transverse portion 351 facing away from the bearing portion 310 is flush with the top of the corresponding support portion 320. In other words, the surface of the transverse portion 351 facing away from the bearing portion 310 is parallel to the bearing portion 310 and flush with the top of the first support portion 320a, so that the cover plate 350 itself could serve as a structure for bearing the bin 500. In other words, the arrangement of the transverse portion 351 of the cover plate 350 could be understood as widening the width (a width along the x-direction) of the first support portion 320a, improving the stable support of the comb tooth structure to the bin 500. In addition, the arrangement of the cover plate 350 also improves the adaptability of the comb tooth structure to the bins 500 of various sizes, that is, the comb tooth structure could stably support the bins 500 of more sizes.

It should be noted that when the first void 3211 is defined in the cover plate 350, the cover plate 350 needs to avoid the corresponding insert bar 421 to ensure that the corresponding insert bar 421 enters the void on a side of the cover plate 350. In other words, the total width of the cover plate 350 and the support portion 320 connected to the cover plate 350 (for example, the first support portion 320a) matches the corresponding insert tooth gap 421a. For example, when the first void 3211 is the gap a1, the distance between the two insert bars 421 extending into the gap a1 and the gap a2 (i.e., the insert tooth gap 421a) needs to be greater than or equal to a width of the structure formed by the cover plate 350 and the first support portion 320a (as illustrated by m1 in FIG. 2).

In some examples, the void 321 includes a second void 3212 formed in the plurality of support portions 320, and in a case where a distance between the first end portion 200a and the second end portion 200b is less than or equal to a first preset distance, at least a portion of the power assembly 220 in the lifting mechanism 200 is located in the avoidance opening 311 and the second void 3212. For example, the motor and the motor housing of the power assembly 220 are located in the avoidance opening 311 and the second void 3212.

By way of example, the second void 3212 may be a gap on a side of at least one support portion 320, such as any one of a gap a1, a gap a2, a gap a3, and a gap a4.

As another example, when the width of each gap on the side of the support portion 320 is smaller than the width of the power assembly 220, a notch 322 may be formed in the at least one support portion 320, the opening of the notch 322 faces the avoidance opening 311, and the notch 322 and the gap on the side of the at least one support portion 320 together form the second void 3212. Thus, the gap on the side of any one or more of the support portions 320 and the notch 322 on the bottom of the support portion 320 may collectively accommodate the power assembly 220.

Referring to FIGS. 1 and 2, taking the lifting assembly 210 being the scissor lift structure as an example, the first end portion 200a of the lifting assembly 210 includes two first sub-end portions (as illustrated by 200a1 and 200a2 in FIGS. 1 and 2) opposite in a direction perpendicular to the height direction (e.g., the width direction). It could be understood that the two first sub-end portions are the tops of the two groups of connecting rods 211; correspondingly, the first void 3211 includes two first sub-voids arranged at intervals in an arrangement direction of the plurality of support portions 320, and at least a portion of each of the first sub-end portions extends into a corresponding first sub-void. A projection of the power assembly 220 on the first end portion 200a is located between the two first sub-end portions, and the second void 3212 is located between the two first sub-voids.

For example, the two first sub-voids may be a gap a1 and a gap a4, respectively, and the second void 3212 includes a gap a2, a gap a3, and the voids 322 arranged at the bottom of the three support portions 320, that is, the second void 3212 spans the three support portions 320 and the gap between the three support portions 320.

Referring to FIG. 1, it should be noted that in embodiments of the present disclosure, the width of the lifting assembly 210 matches the width of the comb tooth structure on the pallet 300 (the width in the x-direction), that is, the two first sub-end portions are just located on both sides of the comb tooth structure along the width direction. While in some examples, the width of the comb structure is greater than the width of the lifting assembly 210, the two first sub-end portions of the lifting assembly 210 may extend into any two gaps in the comb structure, and the power assembly 220 is located in the void between the any two gaps.

It could be understood that the width of the second void 3212 may be adaptively adjusted according to the width of the power assembly 220.

In the above example, the avoidance portion 340 for accommodating the lifting mechanism 200 includes the avoidance opening 311 and the void in the comb tooth structure. In other examples, when the thickness of the bearing portion 310 is suitable, the avoidance portion 340 may also be simply the avoidance opening 311 defined in the bearing portion 310, and at least a portion of the power assembly 220 extends into the avoidance opening 311 when the distance between the first end portion 200a and the second end portion 200b is less than or equal to the first preset distance.

The above is a configuration in which the height of the top of the lifting mechanism 200 is higher than the height of the bottom of the pallet 300.

Referring to FIG. 1, a configuration in which the height of the bottom of the lifting mechanism 200 is lower than the height of the top of the chassis 100 will be described below.

In some examples, the accommodating cavity 130 is formed in the chassis 100, the opening of the accommodating cavity 130 faces the pallet 300, and the second end portion 200b of the lifting mechanism 200 extends into the accommodating cavity 130 to save the occupied space of the lifting mechanism 200 in the height direction, reducing the overall height of the transport robot when retracted to the lowest position.

For example, the second end portion 200b of the lifting assembly 210 according to embodiments of the present disclosure may extend into the accommodation cavity 130 and be connected to the inner wall of the accommodation cavity, so that the second end portion 200b of the lifting assembly 210 shares a portion of the height space with the chassis 100, so that the overall height of the transport robot is reduced, and the overall height of the transport robot when retracted to the lowest position is reduced to match the lower carrier 400.

When the lifting assembly 210 is a scissor lift structure, the second end portion 200b may include two second sub-end portions (as illustrated by 200b1 and 200b2 in FIG. 1) arranged at intervals along the width direction of the chassis 100, and the bottom ends of at least two connecting rods 211 arranged in the crossed configuration in each second sub-end portion may be slidably connected along the inner bottom wall of the accommodating cavity 130, so that the bottom ends of the two connecting rods 211 could be moved toward or away from each other, and the vertical distance from the top ends of the two connecting rods 211, i.e., between the first end portion 200a and the second end portion 200b, is reduced or increased.

For another example, in a case where a distance between the first end portion 200a and the second end portion 200b of the lifting assembly 210 in the height direction is less than or equal to a second preset distance, at least a portion of the power assembly 220 is located within the accommodating cavity 120.

In some examples, as the first end portion 200a of the lifting assembly 210 gradually lowers, the vertical distance between the first end portion 200a and the second end portion 200b of the lifting assembly 210 gradually decreases, and when the vertical distance between the first end portion 200a and the second end portion 200b of the lifting assembly 210 is a second preset distance, the power assembly 220 starts to extend into the accommodation cavity 120, and as the first end portion 200a of the lifting assembly 210 continues to lowers, the height of the power assembly 220 extending into the accommodation cavity 120 increases. That is, after the lifting assembly 210 retracts a certain distance, a portion of the power assembly 220 utilizes the height space of the chassis 100 without occupying additional height space, so that the height of the transport robot when it is retracted to the lowest position is reduced.

In some examples, as the first end portion 200a of the lifting assembly 210 gradually rises from the lowest position, the overlapping area between the power assembly 220 and the chassis 100 gradually decreases, i.e., the power assembly 220 gradually disengages from the accommodating cavity 120; and when the distance between the first end portion 200a and the second end portion 200b of the lifting assembly 210 is greater than the second preset distance, the power assembly 220 and the pallet 300 do not overlap. That is, the power assembly 220 is disengaged from the pallet 300, and the vertical distance between the chassis 100 and the power assembly 220 gradually increases as the first end portion 200a of the lifting assembly 210 continues to rise.

It could be understood that when the power assembly 220 is located at a central position of the lifting assembly 210 in the height direction, i.e., when the lifting assembly 210 extends to the highest position, the distance between the power assembly 220 and the first end portion 200a may be equal to the distance between the power assembly 220 and the second end portion 200b, that is, the second preset distance may be equal to the first preset distance. In other words, the vertical distance between the first end portion 200a and the second end portion 200b of the lifting assembly 210 is the second preset distance, the bottom of the power assembly 220 starts to extend into the accommodating cavity 120, the top of the power assembly 220 starts to extend into the avoidance portion 340 of the pallet 300, and when the lifting assembly 210 is retracted to the lowest position, such as the first working height, a portion of the power assembly 220 in the height direction is located in the accommodating cavity 120, and another portion of the power assembly 220 in the height direction is located in the pallet 300, further reducing the height of the transport robot when it is at the lowest position.

In some examples, when the lifting assembly 210 extends to the highest position, the distance between the power assembly 220 and the first end portion 200a may be greater than the distance between the power assembly 220 and the second end portion 200b, i.e., the second preset distance may be greater than the first preset distance, for example, when the first end portion 200a of the lifting assembly 210 is lowered such that the vertical distance between the first end portion 200a and the second end portion 200b is the second preset distance, the bottom of the power assembly 220 starts to extend into the accommodating cavity 120, and the top of the power assembly 220 is at a certain distance from the pallet 300 in the height direction. As the lifting assembly 210 continues to retract, a portion of the power assembly 220 extending into the accommodating cavity 120 gradually increases, and when the vertical distance between the first end portion 200a and the second end portion 200b is the first preset distance, the top of the power assembly 220 starts to extend into the avoidance portion 340 of the pallet 300; and when the lifting assembly 210 is retracted to the lowest position, the height of the power assembly 220 extending into the accommodating cavity 120 is greater than the height of the power assembly 220 extending into the pallet 300.

In some examples, when the lifting assembly 210 extends to the highest position, the distance between the power assembly 220 and the first end portion 200a may be smaller than the distance between the power assembly 220 and the second end portion 200b, that is, the first preset distance may be greater than the second preset distance. For example, when the first end portion 200a of the lifting assembly 210 is lowered such that the vertical distance between the first end portion 200a and the second end portion 200b is the first preset distance, the top of the power assembly 220 starts to extend into the avoidance portion 340 of the pallet 300, and the bottom of the power assembly 220 is at a certain distance from the chassis 100 in the height direction. As the lifting assembly 210 continues to retract, the portion of the top of the power assembly 220 extending into the pallet 300 gradually increases, and when the vertical distance between the first end portion 200a and the second end portion 200b is the second preset distance, the bottom of the power assembly 220 starts to extend into the accommodating cavity 120 of the chassis 100; and when the lifting assembly 210 is retracted to the lowest position, the height of the power assembly 220 extending into the accommodating cavity 120 is less than the height of the power assembly 220 extending into the pallet 300.

Based on the above, it can be seen that in the transport robot and the warehousing system provided by embodiments of the present disclosure, the height of the bottom of the lifting mechanism 200 is set to be lower than the height of the top of the chassis 100 and/or the height of the top of the lifting mechanism 200 is set to be higher than the height of the bottom of the pallet 200. In other words, the first end portion 200a of the lifting mechanism 200 close to the pallet 300 shares a portion of the height space with the pallet 300 and/or the second end portion 200b of the lifting mechanism 200 close to the chassis 100 shares a portion of the height space with the chassis 100, reducing the overall height of the transport robot when retracted to the lowest position, and allowing the transport robot to freely travel through the bottom of the lower carrier 400 (that is, the bottom of the bearing frame 420) without being interfered by the carrier 400. Thus, the adaptability of the transport robot in the warehouse system to carriers 400 of different heights is improved, facilitating the transfer and docking of the article between the same transport robot and the carriers 400 of different heights without the need of replacing the transport robot, increasing the article transfer efficiency, and reducing the operational maintenance costs of the warehouse system.

It is easy to understand that those skilled in the art may combine, split, recombine, etc. the embodiments of the present disclosure to obtain other embodiments on the basis of several embodiments provided by the present disclosure, and these embodiments do not go beyond the scope of protection of the present disclosure.

In the above specific implementations, the objectives, technical solutions, and beneficial effects of the embodiments of the present disclosure are further described in detail, and it should be understood that the above description is only a specific implementations of the embodiments of the present disclosure, and is not intended to limit the scope of protection of the embodiments of the present disclosure, and any modifications, equivalent substitutions, improvements, etc. made on the basis of the technical solutions of the embodiments of the present disclosure should be included within the scope of protection of the embodiments of the present disclosure.

## Claims

1. A transport robot, comprising:
a lifting mechanism having a first end portion and a second end portion arranged opposite each other in a height direction, and a distance between the first end portion and the second end portion being adjustable;
a pallet configured to carry an article and arranged at the first end portion, and configured to be driven by the lifting mechanism to selectively move in a direction toward or away from the second end portion; and
a chassis arranged at the second end portion and configured to support the lifting mechanism and the pallet and drive the lifting mechanism and the pallet to travel,
wherein a height of a bottom of the lifting mechanism is lower than a height of a top of the chassis, and/or a height of a top of the lifting mechanism is higher than a height of a bottom of the pallet.

2. The transport robot according to claim 1, wherein the lifting mechanism comprises a lifting assembly and a power assembly, two end portions of the lifting assembly opposite each other in the height direction are the first end portion and the second end portion, respectively, and the power assembly is connected with the lifting assembly to drive the first end portion of the lifting assembly to move in a direction toward or away from the second end portion; and
a height of the first end portion of the lifting assembly is higher than the height of the bottom of the pallet.

3. The transport robot according to claim 1, wherein the lifting mechanism comprises a lifting assembly and a power assembly; and
in a case where the distance between the first end portion and the second end portion of the lifting assembly in the height direction is less than or equal to a first preset distance, a height of a top of the power assembly is higher than the height of the bottom of the pallet.

4. The transport robot according to any one of claims 1 to 3, wherein the pallet has an avoidance portion having an opening toward the second end portion, and the avoidance portion extends in the height direction; and
at least a portion of the lifting mechanism extends into the avoidance portion.

5. The transport robot according to claim 4, wherein the pallet comprises a bearing portion and a plurality of support portions;
the plurality of support portions are arranged on the bearing portion at intervals perpendicular to the height direction, the support portion is located on a side of the bearing portion facing away from the second end portion, extends upward in a direction away from the bearing portion, and is configured to support the article; and
the bearing portion defines an avoidance opening, the avoidance opening has a first end facing the second end portion and a second end in communication with a void formed in the plurality of support portions, and the avoidance opening and the void together form the avoidance portion.

6. The transport robot according to claim 5, wherein the void comprises a first void formed in the plurality of support portions; and in the lifting mechanism, the second end portion of the lifting assembly extends into the first void through the avoidance opening; and
the pallet further comprises a cover plate arranged on the bearing portion facing away from the second end portion, the cover plate covers the first void, and cooperates with the support portion corresponding to the first void to define a space for accommodating the second end portion.

7. The transport robot according to claim 6, wherein the first void is a gap on a side of at least one of the support portions in an arrangement direction of the plurality of support portions.

8. The transport robot according to claim 6 or 7, wherein the cover plate comprises a transverse portion and a vertical portion; the transverse portion is arranged opposite the bearing portion, and has a first end connected to the support portion corresponding to the first void and a second end connected to the vertical portion; the vertical portion is arranged opposite the support portion, and the transverse portion, the vertical portion, and the support portion connected to the transverse portion collectively define the space for accommodating the second end portion; and
the first end portion is connected to the transverse portion, and a surface of the transverse portion facing away from the bearing portion is flush with a top of the corresponding support portion.

9. The transport robot according to claim 6 or 7, wherein the void comprises a second void formed in the plurality of support portions, and in a case where the distance between the first end portion and the second end portion is less than or equal to a first preset distance, at least a portion of the power assembly in the lifting mechanism is located in the avoidance opening and the second void.

10. The transport robot according to claim 9, wherein a notch is formed in at least one of the support portions, an opening of the notch faces the avoidance opening, and the notch and a gap on a side of the at least one of the support portions collectively form the second void.

11. The transport robot according to claim 9, wherein the first end portion of the lifting assembly comprises two first sub-end portions opposite in a direction perpendicular to the height direction, correspondingly, the first void comprises two first sub-voids arranged at intervals in the arrangement direction of the plurality of support portions, and at least a portion of each of the first sub-end portions extends into a corresponding first sub-void; and
a projection of the power assembly on the first end portion is located between the two first sub-end portions and the second void is located between the two first sub-voids.

12. The transport robot according to any one of claims 1 to 3, wherein the chassis defines an accommodating cavity, an opening of the accommodating cavity faces the pallet; and
the second end portion of the lifting mechanism extends into the accommodating cavity.

13. The transport robot according to claim 12, wherein the lifting mechanism comprises a lifting assembly and a power assembly, the second end portion of the lifting assembly extends into the accommodating cavity and is connected with an inner wall of the accommodating cavity; and
in a case where the distance between the first end portion and the second end portion of the lifting assembly in the height direction is less than or equal to a second preset distance, at least a portion of the power assembly is located within the accommodating cavity.

14. A warehousing system, comprising:
a transport robot according to any one of claims 1 to 13; and
a carrier having a bearing frame configured to carry an article,
wherein the transport robot realizes transfer of the article between the transport robot and the carrier by performing docking with the bearing frame through the pallet.

15. The warehousing system according to claim 14, wherein the transport robot realizing transfer of the article between the transport robot and the carrier by performing docking with the bearing frame through the pallet comprises:
in a case where the article needs to be transferred from the transport robot onto the carrier, the transport robot is configured to perform at least one of: driving the pallet to a position higher than the bearing frame; moving the pallet onto the bearing frame; and lowering the pallet to a position below the bearing frame such that the article is switched from being supported by the pallet to being supported by the bearing frame; and
in a case where the article needs to be transferred from the carrier onto the transport robot, the transport robot is configured to perform at least one of: driving the pallet to a position below the bearing frame; moving the pallet to a bottom of the bearing frame; and lifting the pallet to a position above the bearing frame such that the article switched from being supported by the bearing frame to being supported by the pallet.

16. The warehousing system according to claim 14, wherein the pallet comprises a bearing portion and a plurality of support portions;
the plurality of support portions are arranged at intervals on a side of the bearing portion facing away from the second end portion of the lifting mechanism, each support portion extends upward in a direction away from the bearing portion, and the plurality of support portions are configured to support the article; and
the bearing frame comprises a plurality of insert bars arranged at intervals, insert tooth gaps formed by the plurality of insert bars are correspondingly matched with the plurality of support portions, and the docking of the pallet and the bearing frame comprises: each support portion extends into a corresponding insert tooth gap.

17. The warehousing system according to claim 16, wherein the bearing portion defines an avoidance opening, the avoidance opening has a first end facing the second end portion, and a second end in communication with a void formed in the plurality of support portions, the avoidance opening and the void collectively form an avoidance portion, and the avoidance portion is configured for the lifting mechanism to extend into.

18. The warehousing system according to claim 17, wherein the void comprises a first void formed in the plurality of support portions; and in the lifting mechanism, the second end portion of the lifting assembly extends into the first void through the avoidance opening; and the first void is a gap on a side of at least one of the support portions in an arrangement direction of the plurality of support portions.

19. The warehousing system according to claim 18, wherein the pallet further comprises a cover plate arranged on the bearing portion facing away from the second end portion, the cover plate covers the first void, and cooperates with the support portion corresponding to the first void to define a space for accommodating the second end portion; and
a total width of the cover plate and the support portion connected with the cover plate in the arrangement direction of the plurality of support portions matches a corresponding insert tooth gap.

20. The warehousing system according to claim 17, wherein when a height of the transport robot is lower than a second working height, at least a portion of the power assembly in the lifting mechanism is located in the avoidance portion, and as the height of the transport robot continuously decreases, the height of the power assembly extending into the avoidance portion gradually increases,
wherein the transport robot is at the second working height at least when:
the plurality of support portions carrying the article are horizontally inserted into the insert tooth gaps formed between the plurality of insert bars; or
the plurality of support portions are inserted into the insert tooth gaps formed between the plurality of insert bars in a height direction of the transport robot, and support the article on the insert bars until the article detached from the insert bars.
